(19) **Europäisches Patentamt**

**European Patent Office**

**Office européen des brevets**

(11) **EP 1 223 121 B1**

(12) **FASCICULE DE BREVET EUROPEEN**

(45) Date de publication et mention
de la délivrance du brevet:
**18.08.2004 Bulletin 2004/34**

(51) Int Cl.⁷: **B65G 47/08**

(21) Numéro de dépôt: **02290081.5**

(22) Date de dépôt: **14.01.2002**

(54) **Procédé et système pour former automatiquement et en continu des couches de lots d'unités de vente avant de les empiler sur une palette**

Verfahren und System zur automatischen und kontinuierlichen Herstellung von Schichten von Verkaufseinheiten vor der Palettierung

Method and system for automatically and continously forming layers of sale units before stacking on a pallet

(84) Etats contractants désignés:
**AT BE CH CY DE DK ES FI FR GB GR IE IT LI LU MC NL PT SE TR**

(30) Priorité: **16.01.2001 FR 0100565**

(43) Date de publication de la demande:
**17.07.2002 Bulletin 2002/29**

(73) Titulaire: **NEWTEC CASE PALLETIZING**
**85292 St-Laurent-sur-Sèvre Cedex (FR)**

(72) Inventeur: **Guasco, Pierre**
**49300 Cholet (FR)**

(74) Mandataire: **Doireau, Marc et al**
**Cabinet ORES,**
**36,rue de St Pétersbourg**
**75008 Paris (FR)**

(56) Documents cités:
**WO-A-00/17080          FR-A- 2 085 397**
**US-A- 3 442 400          US-A- 3 587 876**

## Description

L'invention concerne un procédé et un système pour former automatiquement et en continu des couches de lots d'unités de vente avant de les empiler sur une palette.

On connaît du document FR-A-2 738 559 un dispositif de formation et d'empilage des couches d'unités de vente regroupées en lots dans un système de palettisation fonctionnant à cadence élevée sur une grande variété d'unités de ventes pour former des couches de lots homogènes et/ou hétérogènes.

Dans ce système de palettisation, les lots sont transportés par un convoyeur d'alimentation et transférés par au moins un robot de manipulation sur un convoyeur de constitution de couches. Chaque lot prélevé par un robot est déposé suivant l'orientation souhaitée et à la position qu'il doit occuper dans la couche. Chaque robot est piloté par un automate programmable pour que la couche soit constituée selon un schéma défini par le client. Une fois qu'une couche est constituée, elle est saisie par un organe préhenseur monté sur un pont roulant pour la déposer sur l'une de plusieurs palettes en cours de formation.

Un tel système de palettisation est notamment conçu pour assurer, à un moment donné, une campagne de palettisation visant à satisfaire à une partie d'une commande d'un client, à une commande d'un client, à plusieurs commandes d'un client, à certaines parties de plusieurs commandes de plusieurs clients ou à plusieurs commandes de plusieurs clients.

Le système doit donc être suffisamment flexible pour pouvoir assurer différentes campagnes de palettisation, ce qui nécessite une programmation relativement sophistiquée pour pouvoir travailler à une cadence soutenue.

Un but de l'invention est de concevoir un système de palettisation où la formation des couches est particulièrement bien adaptée dans le cas notamment de lots identiques pour constituer des palettes homogènes.

A cet effet, l'invention propose un procédé pour former automatiquement et en continu des couches de lots d'unités de vente avant de les empiler sur une palette tel que défini dans la revendication 1. De manière préférentielle, un tel procédé consiste:

- à acheminer sur un convoyeur d'accumulation les lots provenant d'une unité de production et à partir desquels on doit former des couches successives selon un schéma prédéterminé pour chaque couche,
- à regrouper sur le convoyeur d'accumulation des séries successives de lots pour former des couches provisoires, chaque série comprenant le nombre de lots constitutifs d'une couche à former,
- à transférer sur un convoyeur de formation de couches chaque couche provisoire accumulée,

- à positionner et orienter automatiquement chaque lot de la couche provisoire sur le convoyeur de formation de couches suivant la position et l'orientation qu'il doit occuper dans la couche définitive à former,
- à regrouper sur le convoyeur de formation de couches une couche où les lots sont correctement positionnés les uns par rapport aux autres selon le schéma souhaité, et
- à prélever la couche ainsi formée pour la déposer sur une palette en cours de constitution.

De manière préférentielle, le procédé consiste à former des couches à partir de lots semblables voire identiques d'unités de vente.

D'une manière générale, le procédé consiste à positionner au moyen de plusieurs robots de manipulation chaque lot d'une couche provisoire suivant l'orientation souhaitée et à la position qu'il doit occuper dans la couche définitive à former, et à affecter à chaque robot le ou les lots à manipuler dans chaque couche provisoire suivant un schéma prédéterminé.

Avantageusement, le procédé consiste à accumuler sur le convoyeur d'accumulation des séries successives de lots suivant plusieurs lignes parallèles à la direction de déplacement du convoyeur pour former des couches provisoires de lots, le nombre de lignes formées dépendant notamment du nombre de lots de la couche, de leurs dimensions, du schéma donné par le client et de la cadence souhaitée pour former les couches.

Avantageusement, lorsqu'une couche provisoire de lots est en formation, on aligne sur un front commun les premiers lots des différentes lignes.

Par ailleurs, le positionnement et l'orientation de chaque lot d'une couche à former sont effectués par des robots manipulateurs qui ne soulèvent pas nécessairement les lots.

Enfin, lorsque les lots d'une couche sont correctement positionnés et orientés, on les regroupe en les faisant venir en appui sur une butée escamotable par exemple, de manière à ce que les lots s'entassent et s'emboîtent les uns dans les autres pour constituer la couche qui, ensuite, est rendue homogène au moyen de conformateurs latéraux par exemple.

L'invention a également pour objet un système pour former automatiquement et en continu des couches de lots d'unités de vente. Ce système est défini dans la revendication 10.

D'autres avantages, caractéristiques et détails de l'invention ressortiront du complément de description qui va suivre en référence à des dessins annexés, donnés uniquement à titre d'exemple et dans lesquels :

- la figure 1 est une vue de dessus schématique d'une unité d'alimentation qui achemine des lots à partir desquels on va former des couches successives,

- les figures 2a et 2b sont des vues de dessus schématiques d'une unité qui assure la répartition, l'accumulation et la distribution des lots constitutifs d'une couche à former,
- la figure 3 est une vue de dessus schématique d'une unité de formation des couches à partir de chaque couche accumulée par l'unité de la figure 2,
- la figure 4 est une vue de dessus schématique d'une variante de la figure 3, et
- les figures 5 et 6 sont des vues schématiques d'un outil manipulateur monté à l'extrémité du bras d'un robot pour positionner et orienter les lots d'une couche à former.

Dans le domaine de la distribution, une campagne de palettisation consiste à former des couches de lots d'unités de vente élémentaires, et chaque couche formée est déposée sur une couche précédente d'une palette en cours de constitution ou sur une palette nue pour être la première couche d'une charge palettisée.

L'invention porte essentiellement sur la formation de couches de lots, en particulier de lots ayant des dimensions semblables et qui contiennent des unités de vente élémentaires similaires, par exemple des lots de six bouteilles.

D'une manière générale, la constitution d'une couche homogène de lots similaires n'implique pas que les lots soient disposés de la même manière les uns par rapport aux autres dans une couche et d'une couche à l'autre, dès l'instant où ils se présentent plutôt sous la forme de blocs parallélépipédiques rectangles que de blocs cubiques.

Par ailleurs, la charge palettisée doit bien entendu être stable avec sa masse bien répartie, mais ces résultats peuvent être obtenus avec des positionnements différents des lots dans une couche et d'une couche à l'autre, sachant que le schéma de constitution de chaque couche d'une palette est généralement imposée par le client et selon des critères qui lui sont propres.

Le procédé de formation de couches selon l'invention va être explicité ci-après en référence aux figures annexées qui illustrent un mode de fonctionnement donné uniquement à titre d'exemple sur la base d'un système composé de plusieurs unités dont l'agencement peut être adapté au cas par cas, en particulier en fonction des cadences souhaitées.

On suppose que chaque lot d'unités de vente forme un bloc parallélépipédique rectangle qui s'étend sur une longueur X.

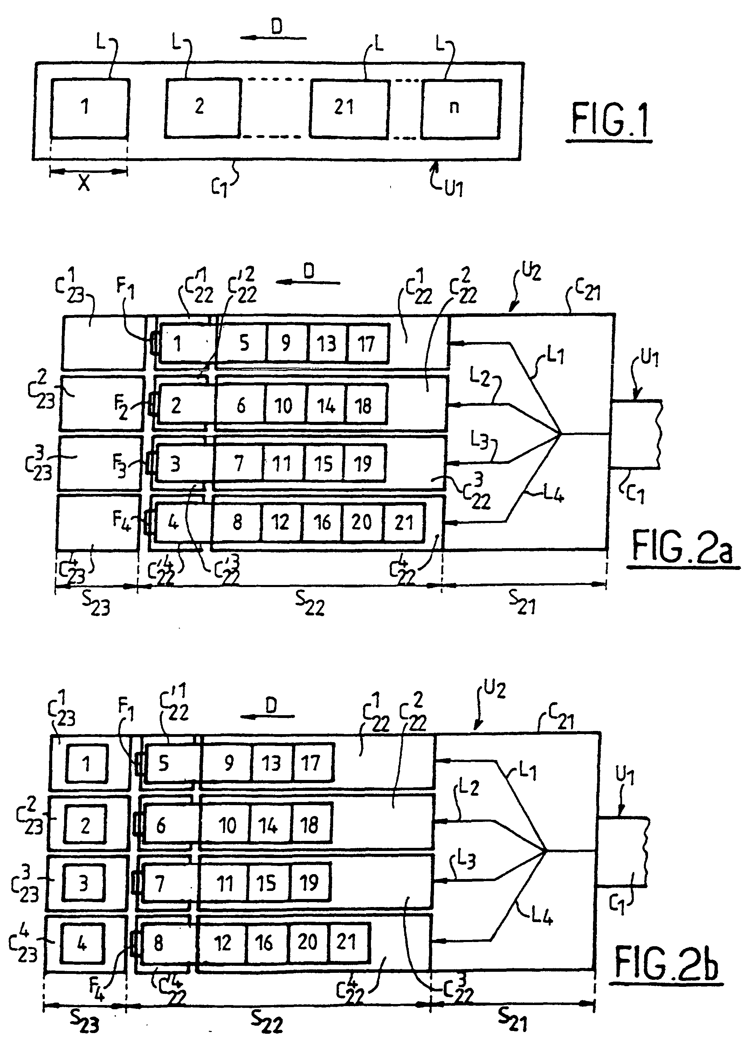

Sur la figure 1, des lots L d'unités de vente élémentaires provenant d'une unité de production sont acheminés par une unité d'alimentation U1 qui est constituée par au moins un convoyeur C1 défilant à une vitesse V1. Dans cet exemple, n lots successifs L numérotés de 1 à $\underline{n}$ et destinés à former plusieurs couches sont acheminés les uns derrière les autres et sensiblement suivant une même orientation, par exemple en long, c'est-à-dire que leur longueur X s'étend sensiblement parallèlement à la direction D de défilement du convoyeur C1.

Dans cet exemple, on suppose qu'une première couche doit être formée à partir des 21 premiers lots L et selon un schéma défini par le client.

Sur les figures 2a et 2b, une unité U2 réceptionne en continu les lots acheminés par l'unité d'alimentation U1. Cette unité U2 comprend successivement une section de répartition $S_{21}$, une section d'accumulation $S_{22}$ et une section de distribution $S_{23}$.

La section de répartition $S_{21}$ a pour fonction de compter et de répartir les lots L suivant plusieurs lignes L1, ..., Ln dont le nombre est notamment fonction du nombre de lots constitutifs d'une couche, de leurs dimensions, du schéma défini par le client et de la cadence souhaitée. Cette section $S_{21}$ peut être constituée par un convoyeur C21 à plateau et à barres, connu en soi, qui défile à une vitesse V2 pour répartir les 21 lots L suivant quatre lignes L1 à L4 par exemple. Ainsi dans cet exemple, les lots (1, 5, 9, 13 et 17) sont aiguillés vers un premier convoyeur $C_{22}^1$, les lots (2, 6, 10, 14 et 18) sont aiguillés vers un deuxième convoyeur $c_{22}^2$, les lots (3, 7, 11, 15 et 19) sont aiguillés vers un troisième convoyeur $C_{22}^3$, et les lots (4, 8, 12, 16, 20 et 21) sont aiguillés vers un quatrième convoyeur $C_{22}^4$, ces convoyeurs étant disposés parallèlement les uns aux autres.

Les quatre convoyeurs $C_{22}^1$, $C_{22}^2$, $C_{22}^3$, et $C_{22}^4$, forment la section d'accumulation $S_{22}$ qui a pour fonction de constituer une couche provisoire avec les 21 lots L tels que répartis sur les quatre lignes L1 à L4. A cet effet, chaque convoyeur $C_{22}^1...C_{22}^n$ associé à une ligne L1, ..., $L_n$ se prolonge par un convoyeur pilote $C_{22}'^1$ ... $C_{22}'^n$ associé à un capteur de positionnement et de comptage F1, ..., $F_n$.

Les quatre convoyeurs pilotes $C_{22}'^1$, $C_{22}'^2$, $C_{22}'^3$, et $C_{22}'^4$, associés aux quatre lignes L1 à L4, ne fonctionnement pas de manière continue, mais par intermittence. Plus précisément les convoyeurs d'accumulation $C_{22}^1$, $C_{22}^2$, $C_{22}^3$, et $C_{22}^4$ ne s'arrêtent pas de fonctionner pour répartir les lots L suivant les quatre lignes L1 à L4, alors que chaque convoyeur pilote $C_{22}'^1$, $C_{22}'^2$, $C_{22}'^3$ et $C_{22}'^4$ va s'arrêter de fonctionner dès que le premier lot L qu'il transporte est intercepté par le capteur associé F1, ... ou Fn. De cette manière, les lots L successifs de chaque ligne L1 à L4 vont pouvoir s'accumuler pour former une couche provisoire de lots L, comme cela est illustré sur la figure 2a, sachant que les premiers lots 1 à 4 des lignes L1 à L4 vont être alignés sur un même front, c'est-à-dire sur une même ligne perpendiculaire à la direction D de défilement des convoyeurs.

La section de distribution $S_{23}$ a pour fonction de transférer la couche provisoire formée au niveau de la section d'accumulation $S_{22}$. Cette section $S_{23}$ est constituée par autant de convoyeurs $C_{23}^1 .... C_{23}^n$ que de lignes L1, ..., $L_n$ de la couche provisoire.

Une fois qu'une couche provisoire est formée, les convoyeurs pilotes $C_{22}^{'1}$, $C_{22}^{'2}$, $C_{22}^{'3}$ et $C_{22}^{'4}$ sont à nouveau mis en route, ainsi que les convoyeurs $C_{23}^{1}$, $C_{23}^{2}$, $C_{23}^{3}$ et $C_{23}^{4}$ de la section de répartition $S_{23}$ pour transférer la couche provisoire de lots L vers l'unité $U_3$ de formation de la couche définitive. Les convoyeurs $C_{23}^{1}$, $C_{23}^{2}$, $C_{23}^{3}$ et $C_{23}^{4}$ sont entraînés à une vitesse plus élevée que les convoyeurs pilotes, de manière à dissocier les lots de chaque couche par tranches successives pour faciliter ensuite leur manipulation, comme cela est illustré sur la figure 2b.

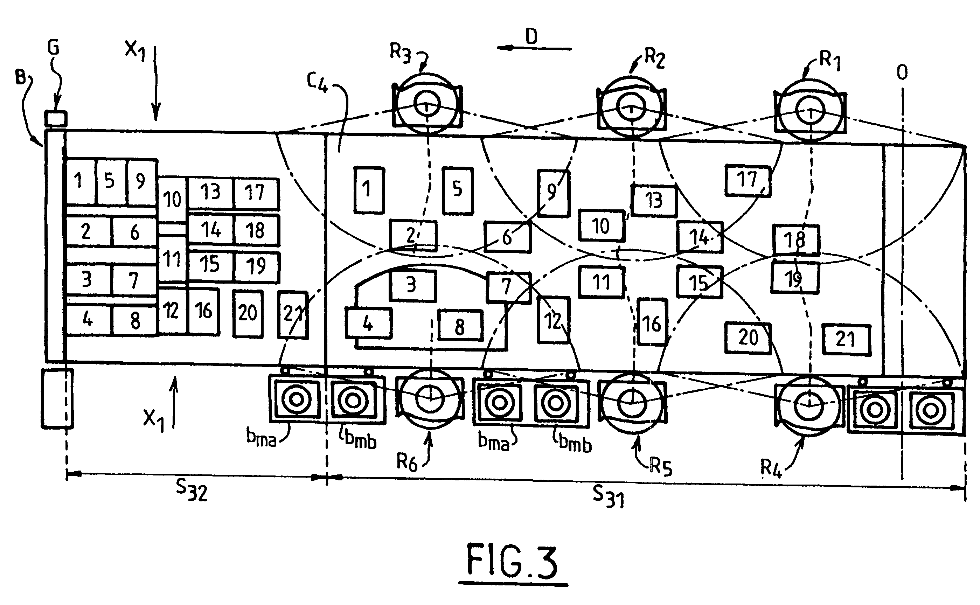

Sur la figure 3, l'unité $U_3$ réceptionne chaque couche provisoire de lots pour former la couche définitive selon le schéma du client. Cette unité U3 est constituée par un convoyeur C4 sur la longueur duquel on définit successivement une première section $S_{31}$ pour positionner chacun des 21 lots L suivant l'orientation souhaitée et la position qu'il doit occuper dans la couche à former, et une seconde section $S_{32}$ pour regrouper les lots suivant une couche. Dans l'exemple illustré, chaque lot L de la couche à former peut être positionné et orienté par l'un de six robots R1 à R6 qui sont disposés de part et d'autre du convoyeur C4.

Plus précisément, les trois robots R1, R2 et R3 sont situés d'un même côté du convoyeur C4 et régulièrement espacés les uns des autres, de manière à positionner et orienter correctement les lots L des deux premières lignes L1 et L2 de la couche provisoire, sachant que l'on affecte à chaque robot des lots déterminés de la couche. D'une manière similaire, les trois robots R4, R5 et R6 sont positionnés de l'autre côté du convoyeur C4 et à intervalles réguliers pour positionner et orienter correctement les lots des lignes L3 et L4 de la couche provisoire.

D'une manière générale, chaque robot R1 à R6 est un automate programmable qui peut calculer à tout moment la position des lots L dont il va avoir la charge de les positionner et les orienter correctement, de manière à pouvoir venir les manipuler avec précision sur le convoyeur C4. A cet effet, chaque robot peut calculer la distance parcourue par les lots à partir d'une origine O au moyen d'un codeur incrémental G monté sur l'arbre moteur du convoyeur C4 et qui compte les impulsions émises à une fréquence qui est fonction de la vitesse du convoyeur C4, de manière à synchroniser la trajectoire de son bras manipulateur à celle du lot à positionner.

Ainsi, chaque robot R1 à R6 va successivement prendre en charge les lots L auxquels il est affecté sans aucune interférence avec les autres robots. En effet, les robots R1 à R6 sont positionnés de part et d'autre du convoyeur C4, de manière à ce que les rayons d'action de leurs bras manipulateurs n'occasionnent pas de télescopages.

En l'espèce et dans l'exemple illustré, les robots R1 à R6 vont manipuler les 21 lots de la couche à former de manière à ce que :

- les lots 1, 5, 9, 10, 11, 12, 16, 20 et 21 soient positionnés à leurs places respectives et orientés transversalement, sachant qu'ils arrivent en étant sensiblement orientés suivant leur longueur X parallèlement à la direction D,

- alors que les autres lots 2, 3, 4, 6, 7, 8, 13, 14, 15 et 17 à 19 ne vont être que repositionnés, sachant que la largeur totale de l'ensemble des convoyeurs $C_{22}^{1}$, $C_{22}^{2}$, $C_{22}^{3}$ et $C_{22}^{4}$ de l'unité U2 est généralement supérieure à celle de la couche à former dans la direction transversale à la direction D.

Bien entendu, dans le cas où la cadence de formation des couches diminue, l'unité U2 peut ne répartir les lots d'une couche à former que suivant deux lignes L1 et L2, par exemple. Dans ce cas, on peut même envisager de supprimer l'unité U2. Dans une telle hypothèse, on peut limiter le nombre de robots et l'abaisser à quatre ou deux, voire même un seul robot, sachant que les distances de repositionnement vont être néanmoins plus importantes sans pour autant nuire à l'efficacité du procédé.

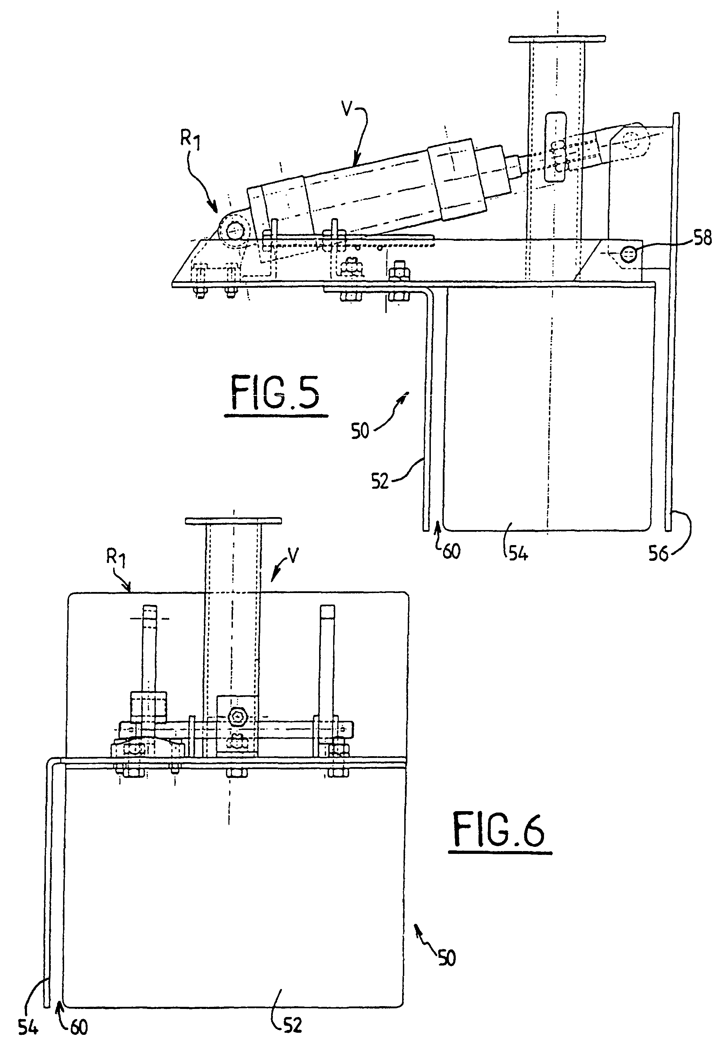

Sur les figures 5 et 6, on a schématiquement illustré un outil de manipulation 50 qui est monté à l'extrémité ou poignet du bras du robot R1 par exemple.

L'outil de manipulation 50 est constitué de deux flasques 52 et 54 formant globalement un angle dièdre de 90°, et d'un flasque 56 monté pivotant autour d'un axe fixe 58 et actionné par l'intermédiaire d'un vérin V. En considérant que le flasque 52 soit situé dans un plan transversal à la direction D de déplacement du convoyeur, le flasque 54 est situé dans un plan parallèle à ladite direction, et le flasque pivotant 56 est monté parallèlement au flasque 52, de manière à définir un logement 60 à volume variable pour y emprisonner un lot pour le positionner et l'orienter correctement sans avoir à le soulever.

Concrètement, lorsque le robot est synchronisé en vitesse avec le lot qu'il doit manipuler, le dièdre formé par les flasques vient prendre appui sur deux faces latérales adjacentes du lot, et le flasque pivotant est ensuite actionné pour venir au contact du lot et le serrer suffisamment pour pouvoir le déplacer. Des capteurs optiques peuvent être avantageusement prévus pour contrôler la prise d'un lot par l'outil manipulateur.

Une fois que les 21 lots sont correctement positionnés par les robots R1 à R6 dans la section $S_{31}$, ils sont regroupés dans la section de regroupement $S_{32}$ en venant en appui les uns contre les autres par suite de l'interposition d'une butée escamotable B qui est disposée transversalement par rapport à la direction de défilement du convoyeur C4 et à une hauteur qui est fonction de la hauteur des lots. Une fois que la couche est globalement formée avec les 21 lots L, deux conformateurs latéraux agissent suivant les flèches $X_1$ de part et d'autre de la couche pour la rendre homogène en supprimant les espaces qui peuvent exister entre les lots, en particulier suivant une direction transversale à la direction de défilement du convoyeur C4.

Une fois que la couche est ainsi formée, on vient la prélever par des moyens préhenseurs appropriés (non représentés) pour la déposer sur une palette en cours de constitution.

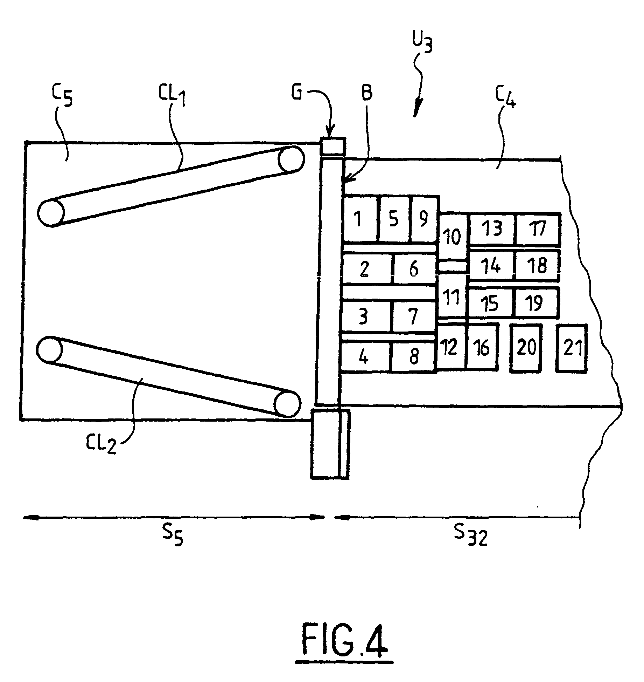

En variante, lorsque chaque lot est suremballé par un film en polyéthylène par exemple, qui présente des propriétés anti-glissement, on peut ne plus utiliser des conformateurs latéraux classiques, mais des conformateurs constitués par exemple de deux courroies latérales $CL_1$ et $CL_2$ convergentes, et cette conformation est réalisée sur un convoyeur C5 situé dans le prolongement du convoyeur C4 pour former une section $S_5$, comme cela est schématiquement illustré à la figure 4. Les deux courroies $CL_1$ et $CL_2$ sont placées de part et d'autre du convoyeur C5 et d'une manière oblique pour forcer les lots à se regrouper.

D'une manière générale, deux configurations sont au moins à envisager pour l'implantation des robots qui assurent l'orientation des lots dans chaque couche.

Dans l'exemple illustré sur la figure 3, les robots sont situés de part et d'autre du convoyeur C4 et reposent sur le sol ou une plate-forme intermédiaire. Selon cette première configuration, chaque robot travaille sur une moitié de la couche à former, et il est donc nécessaire d'en utiliser un nombre pair. Selon une seconde configuration, les robots sont situés au-dessus du convoyeur C4 portés par un portique. Chaque robot peut alors travailler sur toute la largeur de convoyeur, ce qui permet d'en utiliser un nombre impair.

D'une manière générale, chaque campagne de palettisation est orchestrée à partir d'un logiciel exécutable par un calculateur qui est en liaison avec les microprocesseurs qui équipent les différents robots R1 à R6. Ce logiciel assure trois fonctions principales, à savoir une fonction d'aide à la programmation pour permettre à un technicien de traduire un schéma de palettisation en un programme de réalisation de couches et en une mission pour chacun des robots, une fonction de gestion des robots et du mode de fonctionnement des convoyeurs de distribution, et une fonction de terminal de dialogue pour guider l'opérateur dans ses interventions.

Lorsqu'une campagne de formation de couches est terminée, il peut s'avérer nécessaire de changer les outils de manipulation si les lots à manipuler présentent des dimensions nettement différentes.

D'une manière générale, le changement d'outil peut s'effectuer automatiquement en équipant les robots de changeur d'outils. Concrètement, comme cela est schématiquement illustré à la figure 3, on prévoit à côté de chaque robot R1 à R6 un emplacement qui peut recevoir deux porte-outils bma et bmb. Ainsi, lorsqu'une campagne est terminée, les robots R1 à R6 viennent automatiquement déposer leurs outils dans le porte-outils bma et prennent ceux nécessaires à la campagne suivante dans le porte-outils bmb. Bien entendu, tous les paramètres nécessaires au changement des outils pour une nouvelle campagne sont téléchargés dans les robots au cours de la campagne précédente.

Par analogie avec certains centres d'usinage, on peut aussi amener automatiquement les outils de manipulation depuis un magasin central jusqu'au porte-outils bmb, et évacuer automatiquement les outils du porte-outils bma de la campagne précédente pour les retourner au magasin central.

En cours d'exploitation, si des lots s'avèrent défectueux, ou non correctement positionnés, il peut être nécessaire qu'un opérateur intervienne, en particulier sur le convoyeur C4. Pour cela, la campagne est arrêtée, et une procédure d'intervention est alors mise en route, à savoir :

- arrêt des convoyeurs $C_{23}$ et C4,
- mise en consignation des robots R1 à R6 qui placent automatiquement leurs outils au-dessus d'une zone de dégagement pour libérer la zone de constitution des couches, et
- remplacement manuel du lot défectueux ou repositionnement correct du lot mal positionné, cette opération étant avantageusement facilitée par une visualisation sur un écran de la position théorique de chaque lot au moment de l'arrêt d'une part, et par un système optique qui projette sur le convoyeur une grille de repérage ou l'image de l'écran d'autre part.

Le système de formation de couches tel que décrit précédemment sur la base d'un exemple, est de type modulaire de manière à pouvoir être évolutif. D'une manière générale, l'utilisateur ou le client peut acquérir une configuration de base avec un ou deux robots par exemple pour convenir à sa production, et la compléter ensuite avec d'autres convoyeurs d'accumulation et d'autres robots pour satisfaire à un accroissement de sa production.

**Revendications**

1. Procédé pour former automatiquement et en continu des couches de lots d'unités de vente avant de les empiler sur une palette, ce procédé consistant à acheminer sur un convoyeur d'accumulation ($C_{22}$) les lots issus d'une unité de production et à partir desquels on doit former des couches successives selon un schéma prédéterminé pour chaque couche, à transférer les lots sur un convoyeur de formation de couches, et à prélever chaque couche formée sur le convoyeur de formation de couches pour la déposer sur une palette en cours de constitution,

procédé qui est **caractérisé en ce qu'**il consiste :

- à regrouper sur le convoyeur d'accumulation ($C_{22}$) des séries successives de lots pour former des couches provisoires, chaque série comprenant le nombre de lots constitutifs d'une couche à former, et à transférer une à une chaque couche provisoire sur le convoyeur ($C_4$) de formation de couches, et

- au niveau du convoyeur ($C_4$) de formation de couches, à positionner et orienter individuellement au moyen d'une pluralité de robots chacun des lots selon un schéma correspondant à la position et à l'orientation que doit occuper chaque lot dans la couche à former, et à affecter à chaque robot le ou les lots de la couche qu'il doit manipuler suivant ledit schéma.

2. Procédé selon la revendication 1, **caractérisé en ce qu'**il consiste à former des couches à partir de lots identiques d'unités de vente.

3. Procédé selon la revendication 1 ou 2, **caractérisé en ce qu'**il consiste à répartir sur le convoyeur d'accumulation des séries successives de lots suivant plusieurs lignes parallèles à la direction de déplacement du convoyeur pour former des couches provisoires de lots.

4. Procédé selon la revendication 3, **caractérisé en ce qu'**il consiste à former une couche provisoire en répartissant les lots constitutifs d'une couche à former suivant un nombre de lignes qui dépend du nombre de lots de la couche, de leurs dimensions et de la cadence souhaitée pour former les couches.

5. Procédé selon la revendication 3 ou 4, **caractérisé en ce qu'**il consiste, lorsqu'une couche provisoire est formée, à aligner sur un front commun les premiers lots des différentes lignes.

6. Procédé selon l'une quelconque des revendications précédentes, **caractérisé en ce qu'**il consiste à positionner et orienter chaque lot d'une couche provisoire sur le convoyeur de formation de couches et à faire agir les robots sans soulèvement des lots.

7. Procédé selon l'une quelconque des revendications précédentes, **caractérisé en ce qu'**il consiste, au niveau de chaque robot, à suivre le déplacement des lots dont il a la charge pour les manipuler avec précision, en calculant la distance parcourue par chaque lot à partir d'une origine de référence.

8. Procédé selon l'une quelconque des revendications précédentes, **caractérisé en ce qu'**il consiste à accumuler successivement et en continu les lots d'une couche correctement positionnés et orientés en les amenant en appui sur une butée escamotable montée transversalement par rapport au convoyeur de formation de couches, de manière à ce que les lots s'entassent et s'emboîtent les uns dans les autres pour constituer une couche.

9. Procédé selon la revendication 8, **caractérisé en ce qu'**il consiste, une fois une couche constituée en appui sur la butée escamotable, à parfaire la constitution d'une couche au moyen de conformateurs latéraux pour supprimer les espaces entre les lots de la couche, de manière à conformer une couche prête à être palettisée, à escamoter ladite butée et à déposer ladite couche sur une palette en cours de constitution.

10. Système pour former automatiquement et en continu des couches de lots d'unités de vente avant de les empiler sur une palette, ce système comprenant notamment pour la mise en oeuvre du procédé tel que défini par l'une quelconque des revendications précédentes :

- une unité d'alimentation ($U_1$) qui est constituée par au moins un convoyeur ($C,$) sur lesquels sont acheminés des lots ($L$) à partir desquels on veut former des couches successives,
- une unité ($U_2$) qui réceptionne les lots acheminés par le convoyeur d'alimentation ($C_1$) et qui comprend au moins une section de répartition ($S_{21}$) où les lots ($L$) sont répartis suivant un nombre de lignes parallèles qui est fonction de la cadence de formation des couches, une section d'accumulation ($S_{22}$) comprenant un convoyeur par ligne de lots pour former une couche provisoire de lots, et une section de distribution ($S_{23}$) pour transférer la couche provisoire de lots et comprenant un convoyeur par ligne de lots,
- une unité ($U_3$) de formation de couches qui reçoit la couche provisoire de lots transférée par la section de distribution ($S_{23}$) de l'unité ($U_2$), qui est constituée par au moins un convoyeur ($C_4$) et qui comprend une section ($S_{31}$) pour positionner chaque lot ($L$) suivant la position et l'orientation qu'il doit occuper dans la couche au moyen d'au moins un robot ($R_1$), et une section ($S_{32}$) pour regrouper les lots de la couche à former, et
- des moyens ($CL_1$, $CL_2$) pour supprimer les espaces encore libres entre les lots regroupés pour obtenir une couche homogène prête à être palettisée.

11. Système selon la revendication 10, **caractérisé en ce que** plusieurs robots ($R_1$-$R_6$) sont disposés de part et d'autre, ou au-dessus, de la section ($S_{31}$) de positionnement de lots ($L$).

12. Système selon la revendication 11, **caractérisé en ce que** chaque robot ($R_1$-$R_4$) est équipé d'un bras qui porte un outil manipulateur (50) délimitant un logement (60) à volume variable pour s'adapter à différentes dimensions de lots (L) et déplacer un lot sans le soulever.

13. Système selon la revendication 12, **caractérisé en ce que** chaque outil manipulateur (50) est constitué de deux flasques (52, 54) formant un angle dièdre de 90° et d'un flasque pivotant (56) actionné par un vérin (V) porté par le bras du robot.

**Patentansprüche**

1. Verfahren zum automatischen und kontinuierlichen Ausbilden von Schichten von Verkaufseinheitschargen vor deren Aufeinanderschichten auf einer Palette, wobei das Verfahren aus dem Befördern der Chargen, die aus einer Produktionseinheit hervorgegangen sind und auf deren Basis man aufeinander folgende Schichten gemäß einem vorbestimmten Schema für jede Schicht bilden muss. über eine Sammelfördereinrichtung ($C_{22}$), aus dem Überführen der Chargen über eine Fördereinrichtung zum Ausbilden von Schichten und aus dem Abgreifen jeder Schicht besteht, die über die Fördereinrichtung zum Ausbilden von Schichten gebildet wurde, um sie auf einer Palette im Laufe des Aufbaus abzulegen. Verfahren, das **dadurch gekennzeichnet ist, dass** es aus:

- dem Neugruppieren von aufeinander folgenden Chargenserien auf der Sammelfördereinrichtung ($C_{22}$) zum Ausbilden provisorischer Schichten, wobei jede Serie die Anzahl von Chargen enthält, die zum Ausbilden einer Schicht erforderlich ist, und dem Überführen jeder einzelnen provisorischen Schicht über die Fördereinrichtung ($C_4$) zum Ausbilden von Schichten und
- dem Positionieren und individuellen Ausrichten jeder Charge im Bereich der Fördereinrichtung ($C_4$) zum Ausbilden von Schichten durch eine Vielzahl von Robotern gemäß einem Schema, das der Position und der Ausrichtung, die jede Charge in der zu formenden Schicht einnehmen soll, entspricht, und dem Zuordnen der Schichtcharge oder -chargen zu jedem einzelnen Roboter, die dieser gemäß dem genannten Schema handhaben soll. besteht.

2. Verfahren nach Anspruch 1, **dadurch gekennzeichnet, dass** es aus dem Ausbilden von Schichten auf der Grundlage von identischen Chargen von Verkaufseinheiten besteht.

3. Verfahren nach Anspruch 1 oder 2, **dadurch gekennzeichnet, dass** es aus der Verteilung der aufeinander folgenden Serien von Chargen über die Sammelfördereinrichtung besteht, wobei die Chargen mehreren zur Bewegungsrichtung der Fördereinrichtung zum Ausbilden provisorischer Chargenschichten parallel verlaufenden Linien folgen.

4. Verfahren nach Anspruch 3, **dadurch gekennzeichnet, dass** es aus dem Ausbilden einer provisorischen Schicht besteht, wobei die zur Bildung einer Schicht erforderlichen Chargen verteilt werden und einer Anzahl von Linien folgen, die von der Anzahl der Schichtchargen, ihren Abmessungen und der für die Schichtenausbildung gewünschten Geschwindigkeit abhängt.

5. Verfahren nach Anspruch 3 oder 4, **dadurch gekennzeichnet, dass** es, wenn eine provisorische Schicht ausgebildet wird, aus dem Ausrichten der ersten Chargen der verschiedenen Linien an einer gemeinsamen Front besteht.

6. Verfahren nach einem der vorstehenden Ansprüche, **dadurch gekennzeichnet, dass** es aus dem Positionieren und Ausrichten jeder Charge einer provisorischen Schicht auf der Fördereinrichtung zum Ausbilden von Schichten und aus dem In-Betrieb-Setzen der Roboter ohne Anheben der Chargen besteht.

7. Verfahren nach einem der vorstehenden Ansprüche, **dadurch gekennzeichnet, dass** es im Bereich eines jeden Roboters aus der Verfolgung der Bewegung der Chargen besteht, denen er die Ladung entnommen hat, um die Chargen präzise zu handhaben, wobei die zurückgelegte Distanz jeder Charge auf der Basis eines Referenz-Ursprungspunkts berechnet wird.

8. Verfahren nach einem der vorstehenden Ansprüche, **dadurch gekennzeichnet, dass** es aus dem aufeinander folgenden und kontinuierlichen Ansammeln von Schichtchargen besteht, die korrekt positioniert und ausgerichtet sind bei deren Zuführung bis zum Anschlag an ein einziehbares Widerlager, das quer zur Fördereinrichtung zum Ausbilden der Schichten angebracht ist, so dass die Chargen sich aufstapeln und jeweils ineinander greifen zum Aufbau einer Schicht.

9. Verfahren nach Anspruch 8, **dadurch gekennzeichnet, dass** es, sobald eine Schicht am Anschlag des einziehbaren Widerlagers aufgebaut ist, aus dem Fertigstellen des Schichtaufbaus mittels seitlicher Anpassungsvorrichtungen, die die Zwischenräume zwischen den Schichtchargen entfernen, so dass eine Schicht palettierbereit angepasst wird, aus dem Zurückziehen des genannten Widerlagers und aus dem Ablegen der genannten Schicht auf einer im Aufbau befindlichen Palette, besteht.

10. System zum automatischen und kontinuierlichen Ausbilden von Schichten von Verkaufseinheitschargen vor deren Aufschichten auf einer Palette, wobei das System insbesondere für die Durchführung des Verfahrens, wie es in einem der vorstehenden Ansprüche definiert ist, umfasst:

- eine Zufuhreinheit ($U_1$), die aus zumindest einer Fördereinrichtung ($U_1$) aufgebaut ist, über die Chargen (L) zugeführt werden, aus denen aufeinander folgende Schichten ausgebildet werden sollen,
- eine Einheit ($U_2$), die über die Zufuhrfördereinrichtung ($C_1$) die zugeführten Chargen aufnimmt und die zumindest einen Zuteilungsabschnitt ($S_{21}$) umfasst, in dem die Chargen (L) einer Anzahl von parallelen Linien folgend zugeteilt werden, die von der Geschwindigkeit der Schichtenausbildung abhängt, einen Sammelabschnitt ($S_{22}$), der eine Fördereinrichtung in der Linie der Chargen zum Ausbilden einer provisorischen Chargenschicht umfasst, und einen Verteilabschnitt ($S_{23}$), der eine Fördereinrichtung in der Linie der Chargen zum Überführen der provisorischen Chargenschicht umfasst,
- eine Einheit ($U_3$) zur Schichtenausbildung, die die provisorische Chargenschicht. die durch den Verteilabschnitt ($S_{23}$) der Einheit ($U_2$) überführt wurde, aufnimmt, die aufgebaut ist aus zumindest einer Fördereinrichtung ($C_4$) und die einen Abschnitt ($S_{31}$) zum Positionieren jeder Charge (L) mittels zumindest eines Roboters ($R_1$) gemäß der Position und Ausrichtung, die die Charge in der Schicht einnehmen soll. sowie einen Abschnitt ($S_{32}$) zum Umgruppieren der Chargen der zu formenden Schicht umfasst, und
- Einrichtungen ($CL_1$, $CL_2$) zum Beseitigen der noch freien Zwischenräume zwischen den umgruppierten Chargen, um eine homogene, palettierbereite Schicht zu erhalten.

11. System nach Anspruch 10, **dadurch gekennzeichnet, dass** mehrere Roboter ($R_1$-$R_6$) zu beiden Seiten des Abschnitts ($S_{31}$) oder darüber zum Ausrichten der Chargen (L) angeordnet sind.

12. System nach Anspruch 11, **dadurch gekennzeichnet, dass** jeder Roboter ($R_1$-$R_4$) mit einem Arm ausgestattet ist, der ein Handhabungswerkzeug (50) trägt, das einen Aufnahmebereich (60) begrenzt. dessen variables Volumen der Anpassung an unterschiedliche Abmessungen von Chargen (L) und dem Verschieben einer Charge, ohne sie anzuheben, dient.

13. System nach Anspruch 12, **dadurch gekennzeichnet, dass** jedes Handhabungswerkzeug (50) aus zwei Flanschen (52, 54) besteht, die einen Flächenwinkel von 90° einnehmen, und aus einem Drehflansch (56), der durch einen vom Roboterarm getragenen Stellantrieb (V) angetrieben wird.

**Claims**

1. Method for automatically and continuously forming layers of sale units before stacking them on a pallet, wherein the batches obtained from a production unit from which successive layers are to be formed in accordance with a predetermined plan for each layer are moved along on a collecting conveyor ($C_{22}$), the batches are transferred onto a layer forming conveyor, and each layer formed on the layer forming conveyor is taken in order to place it on a pallet in the process of being loaded up, said method being **characterised in that** it comprises:

- combining successive series of batches on the collecting conveyor ($C_{22}$) to form temporary layers, each series comprising the number of batches that make up a layer which is to be formed, and transferring each temporary layer, one by one, onto the layer forming conveyor ($C_4$), and

- at the layer forming conveyor ($C_4$), individually positioning and orienting each of the batches, by means of a plurality of robots, in accordance with a plan corresponding to the position and orientation which each batch is to occupy in the layer which is to be formed, and assigning to each robot the batch or batches of the layer which it is to handle according to said plan.

2. Method according to claim 1, **characterised in that** it comprises forming layers from identical batches of sale units.

3. Method according to claim 1 or 2, **characterised in that** it comprises distributing on the collecting conveyor successive series of batches in several rows parallel to the direction of travel of the conveyor to form temporary layers of batches.

4. Method according to claim 3, **characterised in that** it comprises forming a temporary layer by distributing the batches that make up a layer which is to be formed in a number of rows dependant on the number of batches in the layer, their dimensions and the desired rate of forming the layers.

5. Method according to claim 3 or 4, **characterised in that** it comprises, when a temporary layer is formed, aligning the first batches of the different rows along a common front.

6. Method according to any one of the preceding claims, **characterised in that** it comprises positioning and orienting each batch of a temporary layer on the layer forming conveyor and actuating the robots with lifting the batches.

7. Method according to any one of the preceding claims, **characterised in that** it comprises, for each robot, monitoring the movement of the batches which it is dealing with in order to handle them with precision, calculating the distance travelled by each batch from a reference starting point.

8. Method according to any one of the preceding claims, **characterised in that** it comprises successively and continuously accumulating the batches of a layer which have been correctly positioned and oriented by bringing them into abutment on a retractable stop member mounted transversely with respect to the layer forming conveyor, so that the batches are stacked and interlocked to form a layer.

9. Method according to claim 8, **characterised in that** it comprises, after the formation of a layer abutting on the retractable stop member, finalising the construction of a layer by means of lateral formers to eliminate the spaces between the batches in the layer, so as to shape a layer ready for transfer to a pallet, retracting said stop member and placing said layer on a pallet which is in the course of being made up.

10. System for automatically and continuously forming layers of sale units before stacking them on a pallet, this system comprising, in particular, for carrying out the process as defined by any one of the preceding claims:

   - a supply unit $(U_1)$ consisting of at least one conveyor $(C_1)$ on which the batches (L) from which successive layers are to be formed are moved along,
   - a unit $(U_2)$ which receives the batches moved along by the supply conveyor $(C_1)$ and which comprises at least one dividing section $(S_{21})$ where the batches (L) are divided into a number of parallel rows as a function of the rate of formation of the layers, a collecting section $(S_{22})$ comprising a conveyor for rows of batches to form a temporary layer of batches, and a distribution section $(S_{23})$ for transferring the temporary layer of batches and comprising a conveyor for rows of batches,
   - a layer forming unit $(U_3)$ which receives the temporary layer of batches transferred by the

distribution section $(S_{23})$ of the unit $(U_2)$, which consists of at least one conveyor $(C_4)$ and which comprises a section $(S_{31})$ for positioning each batch (L) in the position and orientation which it is to occupy in the layer by means of at least one robot $(R_1)$, and a section $(S_{32})$ for combining the batches of the layer which is to be formed, and

   - means $(CL_1, CL_2)$ for eliminating the empty spaces between the combined batches to obtain a homogeneous layer ready for loading onto a pallet.

11. System according to claim 10, **characterised in that** a plurality of robots $(R_1-R_6)$ are arranged either side of or above the section $(S_{31})$ for positioning batches (L).

12. System according to claim 11, **characterised in that** each robot $(R_1-R_4)$ is equipped with an arm which carries a manipulating tool (50) delimiting a recess (60) of variable volume for adapting to different sizes of batches (L) and moving a batch without lifting it.

13. system according to claim 12, **characterised in that** each manipulating tool (50) consists of two chucks (52, 54) forming a dihedral angle of 90° and a pivoting chuck (56) actuated by a jack (V) carried by the robot arm.

FIG.1

FIG.2a

FIG.2b

FIG.3

FIG.4

FIG.5

FIG.6